# EUROPEAN PATENT SPECIFICATION

(11) **EP 0 459 193 B1**
(45) Date of publication and mention of the grant of the patent: **13.04.1994**
(21) Application number: 91107555.4
(22) Date of filing: 09.05.1991
(51) Int. Cl.: A01B 1/02, B25G 1/10

(54) **A handle for a tool, particularly for a shovel**
Handgriff für ein Werkzeug, insbesondere für eine Schaufel
Manche pour outil, particulièrement pour pelle

(30) Priority: 14.05.1990 IT 2029690
(43) Date of publication of application: 04.12.1991
(73) Proprietor: Corrado, Ennio, IT-21013 GALLARATE (Varese) (IT)
(72) Inventor: Corrado, Ennio, IT-21013 GALLARATE (Varese) (IT)
(74) Representative: Dr. Ing. A. Racheli & C. S.r.l.

(56) References cited:
- FR-A- 2 139 555
- GB-A- 117 617
- US-A- 1 713 675
- US-A- 3 549 189
- US-A- 3 848 915
- US-A- 4 023 606
- US-A- 4 639 029

## Description

Shovels are widely known and used, which are provided with a metallic trowel-shaped or blade-shaped working portion and with a wooden handle. Wooden handles have various disadvantages: they are heavy, they break easily, and moreover they are rather expensive since the availability of raw material is relatively short.

Metallic handles have been realized, but they were not successful since the material is heavy, unpleasantly cold or hot to the touch, according to the temperature it is exposed to, and moreover it becomes slippery with perspiration.

US-A-3 549 189 discloses a handle comprising a plurality of members, a body reinforced with webs, a cap, a ferrula, which increase the overall weight, further the assembly of the parts is cumbersome and the handle is slippery.

The aim of the present invention is to provide a handle for a tool, particularly for a shovel, or the like, which is light, resistant, pleasant to the touch and non-slippery.

These aims have been achieved with a handle according to claim 1. The new handle is made of a curved aluminium or light alloy plate or sheet, with its longitudinal edges seamed with one another and with one or more inner longitudinal reinforcing folds in different forms. The inner chamber is filled with filling material, for example polyurethan or other insulating and light materials: the plate is preferably provided with through holes or microholes along its length or a segment thereof.

The new handle is light, elastic and resistant. It never gives a feeling of excessive warmth or cold to the touch. The microholes allow a certain absorption of perspiration when working and in any case allow its evaporation immediately or soon after, so that the handle is not slippery.

A purely exemplary, and therefore non-restrictive, embodiment of the present invention is described herebelow, with reference to the appended drawings, in which:

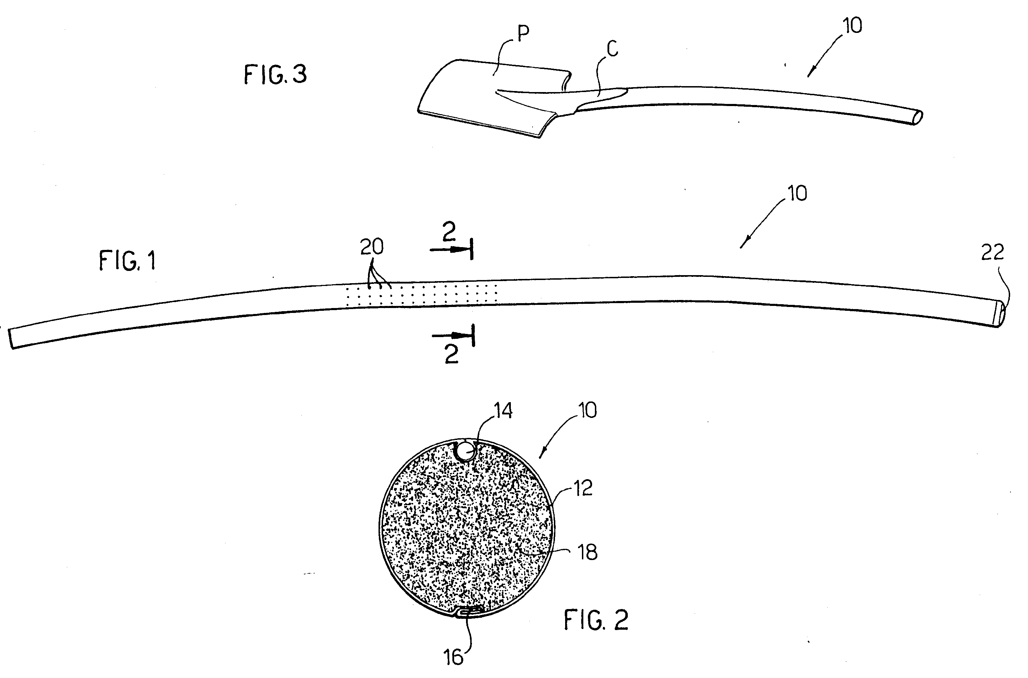

- Figure 1: is a side-view of the handle, on reduced scale;
- Figure 2: is a sectional view along 2-2 in figure 1, enlarged with respect to said figure;
- Figure 3: is a perspective view of a shovel with the new handle mounted thereon, on a further reduced scale with respect to figure 1.

The handle according to the present invention is indicated as a whole with reference number 10 and is made of an aluminium or light alloy plate or sheet indicated with 12, curved so as to form a reinforcing fold 14 along a longitudinal line and, opposed to it, a saddlejoint or seam 16 joining the longitudinal edges. The folding is generally carried out in a forming machine. The inner chamber formed in this way in the handle is filled with insulating filling material 18, generally polyurethan or the like.

The plate 12 can be provided along its whole length, or only along segments thereof, with through holes or microholes 20, having a diameter of about 0,5 to 1 mm.

The handle will have a tapering form at one end with different diameters depending on the tool and will be eventually provided with a closing cap 22 at the other end, so as to be normally inserted in a traditional tang C of a working portion or blade P of the shovel.

## Claims

1. A handle for a tool, particularly a shovel or the like, characterized in that it is comprised of light alloy sheet or sheets (12) bent in tubular shape and a filling (18) of insulating material; said sheet or sheets (12) having holes or microholes and having the longitudinal edges seamed together.

2. A handle according to claim 1, characterized in that it comprises a longitudinal inner reinforcing portion, formed by a ply of the sheet or sheets.

3. A handle according to claim 1, wherein said insulating material is foamed polyurethan.

4. A handle according to claim 1, characterized in that it has a tapered end portion.

5. A handle according to claim 1, characterized in that its whole length is provided with said holes or microholes.

6. A handle according to claim 1, characterized in that a portion thereof is provided with said holes or microholes.

## Patentansprüche

1. Handgriff für ein Werkzeug, insbesondere für eine Schaufel oder dergleichen, dadurch gekennzeichnet, daß dieser ein Blech oder Bleche (12) aus Leichtmetall aufweist welches/welche rechtförmig gebogen ist/sind und eine Füllung (18) aus isolierendem Material; wobei dieses Blech oder diese Bleche (12) mit Löchern oder Mikro-Löchern versehen ist/sind und wobei die Längskanten gegenseitig eingehakt sind.

2. Handgriff nach Anspruch 1, dadurch gekennzeichnet, daß dieser einen längsförmigen, inneren Teil als Verstärkung aufweist, der durch eine Fals des Blechs oder der Bleche gebildet wird.

3. Handgriff nach Anspruch 1, wobei das isolierende Material geschäumtes Polyurethan ist.

4. Handgriff nach Anspruch 1, dadurch gekennzeichnet, daß dieser ein sich verjüngendes Endes besitzt.

5. Handgriff nach Anspruch 1, dadurch gekennzeichnet, daß die ganze Länge mit diesen Löchern oder Mikro-Löchern versehen ist.

6. Handgriff nach Anspruch 1, dadurch gekennzeichnet, daß ein Teil desselben mit diesen Löchern oder Mikro-Löchern versehen ist.

## Revendications

1. Manche pour outil, particulièrement pour pelle ou similaires, caractérisé en ce qu'il comprend une ou des feuilles (12) en tôle en alliage léger pliées en forme tubulaire et un remplissage (18) de matériau isolant; la ou lesdites feuilles (12) ayant des trous ou des microtrous et des bords longitudinaux agrafés ensemble.

2. Manche selon la revendication 1, caractérisé en ce qu'il comprend une portion de renforcement longitudinale intérieure, formée par une pli de la ou les feuilles de tôle.

3. Manche selon la revendication 1 où ledit matériau isolant est du polyuréthane expansé.

4. Manche selon la revendication 1, caractérisé en ce qu'il a une portion finale conique.

5. Manche selon la revendication 1, caractérisé en ce que toute son extension présente lesdits trous ou microtrous.

6. Manche selon la revendication 1, caractérisé en ce qu'une portion de ce dernier présente lesdits trous ou microtrous.
